# EUROPÄISCHE PATENTSCHRIFT

(11) **EP 2 683 959 B1**
(45) Veröffentlichungstag und Bekanntmachung des Hinweises auf die Patenterteilung: **06.12.2017**
(21) Anmeldenummer: 12714546.4
(22) Anmeldetag: 01.03.2012
(51) Int. Cl.: F16C 35/02, F04D 29/046, F04D 29/047, F04D 29/62

(54) **VERFAHREN ZUR MONTAGE EINES HYDRODYNAMISCHEN GLEITLAGERS UND HYDRODYNAMISCHES GLEITLAGER, INSBESONDERE EINER MAGNETKUPPLUNGSPUMPE**
METHOD FOR MOUNTING A HYDRODYNAMIC PLAIN BEARING, AND HYDRODYNAMIC PLAIN BEARING, IN PARTICULAR OF A MAGNETICALLY COUPLED PUMP
PROCÉDÉ DE MONTAGE D'UN PALIER LISSE HYDRODYNAMIQUE ET PALIER LISSE HYDRODYNAMIQUE, NOTAMMENT D'UNE POMPE À ENTRAÎNEMENT MAGNÉTIQUE

(30) Priorität: 11.03.2011 DE 102011013620
(43) Veröffentlichungstag der Anmeldung: 15.01.2014
(73) Patentinhaber: Ruhrpumpen GmbH, 58453 Witten (DE)
(72) Erfinder: SCHNEIDER, Günther, 44627 Herne (DE); WESTIB, Michael, 44879 Bochum (DE); KOEP, Dirk, 45699 Herten (DE)
(74) Vertreter: Wettlaufer, Frank
(86) Internationale Anmeldenummer: PCT/DE2012/000205
(87) Internationale Veröffentlichungsnummer: WO 2012/122962

(56) Entgegenhaltungen:
- EP-A1- 0 961 038
- EP-B1- 0 814 275
- DE-U1- 29 500 108
- JP-A- 1 242 813
- JP-A- 60 047 127

## Beschreibung

Die Erfindung betrifft ein Verfahren zur Montage eines hydrodynamischen Gleitlagers einer Welle einer Magnetkupplungspumpe, mit den Merkmalen des Oberbegriffs des Anspruchs 1. Die Erfindung betrifft aber auch das hydrodynamische Gleitlager mit den Merkmalen des Oberbegriffs des Anspruchs 6.

Die DE 295 00 108 U1 befasst sich mit einer Magnetkupplung, die ein hydrodynamisches Gleitlager hat. Dabei ist eine Lagerschale vorgesehen, welche ebenso wie die Lagerringe aus einer Keramik gebildet sind. Die Lagerringe sind mittels Schrumpfsitz in dem Lagergehäuse gehalten. Die Zusammenfassung der JP 60-047127 A befasst sich mit einem Bolzenaugenverbindungselement, dessen Dreh- und Gleiteigenschaften und Verschleißfestigkeit verbessert werden soll. Die Zusammenfassung der JP 01-242813A beschäftigt sich mit einem Keramikring, welcher in einem metallischen Element mittels Schrumpfsitz gehalten ist. Der Keramikring wird vor Zerstörung geschützt, indem dieser nur noch mit einer Druckkraft belastet wird. Die EP 0 961 038 A1 verweist darauf, dass zur kraftschlüssigen Verbindung von Bauteilen reibungserhöhende Beschichtungen vorgesehen werden könnten.

Magnetkupplungspumpen sind allgemein bekannt, und zum Beispiel in der DE 10 2009 022 916 A1 beschrieben. Dabei wird die Pumpenleistung von einer Antriebswelle aus über einen Magnet tragenden Rotor (Außenrotor) berührungsfrei und im Wesentlichen schlupflos auf den pumpenseitigen Magnetträger (Innenrotor) übertragen. Der Innenrotor treibt die Pumpenwelle an, welche in einer vom Fördermedium geschmierten Gleitlagerung, also in einer hydrodynamischen Gleitlagerung gelagert ist. Zwischen dem Außenrotor und dem Innenrotor, also zwischen den Außen- und den Innenmagneten liegt der Spalttopf mit seiner zylindrischen Wand. Der Spalttopf ist mit seinem Flansch mit einer Pumpenkomponente, beispielsweise einem Gehäusedeckel verbunden, und weist gegenüberliegend dazu einen geschlossenen Boden auf. Der Spalttopf, also die Magnetkupplungspumpe trennt zuverlässig den Produktraum von der Umwelt, so dass die Gefahr eines Produktaustrittes mit allen damit verbundenen negativen Konsequenzen ausgeschlossen werden kann. Eine Magnetkupplungspumpe ist demnach die Kombination aus einer konventionellen Pumpenhydraulik mit einem magnetischen Antriebssystem. Dieses System nutzt die Anziehungs- und Abstoßungskräfte zwischen Magneten in beiden Kupplungshälften zur berührungslosen und schlupflosen Drehmomentübertragung. Besonders im Umgang mit sehr wertvollen oder sehr gefährlichen Stoffen birgt die Magnetkupplungspumpe demnach große Vorteile.

Die EP 0 814 275 B1 beschäftigt sich mit einem hydrodynamischen Gleitlager einer Magnetkupplungspumpe, welches als kombiniertes Axial- und Radiallager ausgebildet ist. Das Gleitlager der EP 0 814 275 B1 weist zwei Lagerhülsen, zwei auf den Lagerhülsen gleitbare Lagerbüchsen, eine zwischen den Lagerhülsen angeordnete Distanzhülse und eine zwischen den Lagerbüchsen angeordnete Distanzbüchse auf. Die Lagerhülsen und -büchsen sind aus einem keramischen Werkstoff gebildet, wobei die Distanzhülse bzw. -büchse aus einem Metall gebildet ist. Um ein hydrodynamisches Gleitlager zu schaffen, welches kostengünstig herstellbar sein soll und so ausgeführt sein soll, dass jederzeit genügend Schmierung durch das zu fördernde Medium in das Gleitlager gelangt, schlägt die EP 0 814 275 B1 vor, dass der Innendurchmesser der Lagerhülsen größer ist als der Innendurchmesser der Distanzhülse. Die EP 0 814 275 B1 offenbart, dass die Lagerhülse radial im kalten Zustand über den L-Ring der Distanzhülse zentriert wird. Im warmen Zustand wird die Zentrierung über die Ausdehnung der Welle von den Lagerhülsen übernommen. Nachteilig ist dabei anzusehen, dass sich Partikel, z.B. Schmutzpartikel zwischen der Welle und der keramischen Lagerhülse sammeln können, so dass die Gefahr besteht, dass die Lagerhülsen bei einer thermischen Ausdehnung zerstört bzw. gesprengt werden könnten.

Bekannt sind demnach hydrodynamische Gleitlager, deren Komponenten aus artfremden Werkstoffen gebildet sind, wobei z.B. die Lagerhülsen aus einer Keramik, z.B, aus einem gesinterten Siliziumkarbid und die Spannhülse bzw. die Distanzhülse aus einem Metall, z.B. aus einem Edelstahl besteht. Auch die Lagerbuchse besteht dabei bevorzugt aus einem keramischen Werkstoff, wobei das Lagergehäuse wiederum aus einem metallischen Werkstoff besteht. Die Werkstoffe weisen jedoch unterschiedliche Eigenschaften auf, die es zu beachten gilt, wobei z.B. unterschiedliche (thermische) Ausdehnungskoeffizienten (Keramik:Metall 1:4) zu erwähnen sind. Insofern können bei thermischer Beanspruchung der Metall-Keramik-Verbindung Verspannungen auftreten, wobei sich die metallischen Verbindungspartner mehr ausdehnen als der keramische Verbindungspartner. Um die Lagerbuchse in dem Lagergehäuse verdrehsicher zu lagern, sind Stiftlösungen bekannt, wobei beispielsweise Radialbolzen vorgesehen werden, welche im eingebauten Zustand des Gleitlagers in eine Radialbohrung in der Lagerbuchse eingreift, wie zum Beispiel die EP 0 814 275 B1 offenbart.

Nachteilig bei dem bekannten Stand der Technik ist, dass die Lagerbuchse aufgrund der einzubringenden Radialbohrung sehr störanfällig ist, da diese durch den Eingriff dort zumindest geschwächt ist. Weiter müssten nachteiliger Weise Maßnahmen zur axialen Verspannung, z.B. L-Profilringe vorgesehen werden, um unterschiedlichen thermisch bewirkten Längenausdehnungen der unterschiedlichen Werkstoffe entgegen treten zu können.

Der Erfindung liegt die Aufgabe zugrunde, ein Verfahren zur Montage eines hydrodynamischen Gleitlagers bzw. ein hydrodynamisches Gleitlager der Eingangs genannten Art anzugeben, bei welchem Materialschwächungen der Lagerbuchse vermeidbar sind, wobei gleichzeitig auf besondere axiale und/oder radiale Verspannungsmaßnahmen verzichtet werden kann.

Erfindungsgemäß wird die Aufgabe durch ein Verfahren zur Montage eines hydrodynamischen Gleitlagers mit den Merkmalen des Anspruchs 1 gelöst. Der vorrichtungstechnische Teil der Aufgabe wird durch ein hydrodynamisches Gleitlager mit den Merkmalen des Anspruchs 6 gelöst.

Es ist darauf hinzuweisen, dass die in den Ansprüchen einzeln aufgeführten Merkmale weitere Ausgestaltungen der Erfindung aufzeigen. Die Beschreibung charakterisiert und spezifiziert die Erfindung insbesondere im Zusammenhang mit den Figuren zusätzlich.

Gemäß der Erfindung wird ein Verfahren zur Montage eines hydrodynamischen Gleitlagers einer Welle, einer Magnetkupplungspumpe vorgeschlagen, welches eine zwischen Lagerhülsen angeordnete Spannhülse und eine zwischen einer Lagerhülse und einem Lagergehäuse angeordnete Lagerbuchse keramischen Werkstoffs aufweist, welches Verfahren zumindest durch die Schritte gekennzeichnet ist, dass
A ein Spannring an zumindest seinem zur Lagerbuchse orientierten Innenumfang mit einer reibungserhöhenden Beschichtung versehen wird, dann
B der Spannring erwärmt wird und auf die Lagerbuchse gebracht wird, so dass eine Vormontageeinheit gebildet ist, sodann
C das Lagergehäuse erwärmt wird, wobei die Vormontageeinheit in das erwärmte Lagergehäuse eingesetzt wird.

Erfindungsgemäß weist der Spannring an seinem Innenumfang, also an seiner zur Lagerbuchse weisenden Oberfläche die reibungserhöhende Beschichtung auf. In bevorzugter Ausführung ist vorgesehen, dass der Spannring an beiden Oberflächen, also an seinem Innenumfang und an seinem Außenumfang mit einer reibungserhöhenden Beschichtung versehen ist. Die reibungserhöhende Beschichtung kann mittels Elektrolyse auf den Spannring aufgebracht werden. Denkbar ist aber auch, dass die reibungserhöhende Beschichtung aufgeklebt oder aufgespritzt wird, wobei die beispielhaft genannten Auftragverfahren natürlich nicht beschränkend wirken sein sollen.

Der Spannring kann aus einem metallischen oder nicht metallischen Werkstoff, bevorzugt aus einem metallischen Sonderwerkstoff, wie z.B. aus einem Duplexstahl oder mit ähnlichen physikalischen Eigenschaften gebildet sein, wobei der Spannring auch aus einem hochwarmfesten Edelstahl oder aus einem Federstahl gebildet sein kann.

Bei dem Erwärmen des metallischen Spannrings weitet sich dieser, so dass die Lagerbuchse, welche bevorzugt aus einem keramischen Werkstoff, z.B. aus einem gesinterten Siliziumkarbid (SSiC) gebildet ist, in den Spannring einlegbar ist. Zweckmäßig ist, wenn die so gebildete Vormontageinheit, bzw. der erwärmte Spannring zunächst abgekühlt wird, so dass sich der Spannring wieder zusammenzieht. So wird ein erster Pressverbund, nämlich zwischen der keramischen Lagerbuchse und dem metallischen Spannring erreicht.

Bei Schritt C wird das metallische Lagergehäuse erwärmt, so dass sich dieses weitet. In das aufgeweitete Lagergehäuse kann die Vormontageeinheit eingesetzt werden, wobei das Lagergehäuse nach dem Einsetzten abgekühlt wird, so dass der Spannring mit seiner zum Lagergehäuse orientierten Oberfläche, also mit seinem Außenumfang an dem Lagergehäuse anliegt.

Zielführend im Sinne der Erfindung ist, dass so ein doppelter Pressverbund (Spannring/Lagerbuchse; Spannring/Lagergehäuse) gebildet ist, wobei der Spannring, die Lagerbuchse und das Lagergehäuse unter Wärmeeinfluss montiert werden und anschließend jeweils abgekühlt werden. So wird ein sehr hoher Fugendruck erreicht, welcher eine radiale Verdrehsicherung und eine axiale Verschiebesicherung gewährleistet, welcher auch unter Betriebsbedingungen, insbesondere unter Wärmeeinfluss erhalten bleibt. Mittels des vorteilhaften Mehrschichtenpressverbundes erhöht sich die radiale und axiale Belastbarkeit der Komponenten in der gesamten Einheit, also in dem hydrodynamischen Gleitlager um ein Vielfaches.

In bevorzugter Ausführung ist die reibungserhöhende Beschichtung härter als der keramische Werkstoff der Lagerbuchse, also z.B. als Diamantbeschichtung ausgeführt. Diese verzahnt sich zum einen in der keramischen Lagerbuchse und zum anderen in dem metallischen Lagergehäuse, und bildet so eine radiale und axiale Verdreh- und Verschiebesicherung.

Zweckmäßig ist noch im Sinne der Erfindung wenn an der Lagerbuchse bzw. an deren Umfang stirnseitig jeweils eine Fase, also eine Kantenfase vorgesehen wird, um so Kantenbelastungen zu vermeiden. Diese Maßnahme ist insbesondere zielführend bei dem An-. bzw. Abfahren der beispielhaften Magnetkupplungspumpe, da so der Kantendruck, welcher durch Taumelbewegungen der rotierenden Einheit und Einwirkungen von Radialkräften von einem Druckstutzen auf das Laufrad entstehen könnte, kompensiert werden kann. Insofern sind Kantenfasen vorteilhaft um Kantenbelastungen z.B. beim An- und Abfahren der Magnetkupplungspumpe z.B. durch radiale hydraulische Belastung zu vermeiden. Eine partielle bzw. punktuelle Lagerbelastung wird somit quasi ausgeschlossen.

In weiter günstiger, nicht erfinderischer Ausgestaltung wird ein hydrodynamisches Gleitlager einer Welle, einer Magnetkupplungspumpe vorgeschlagen, welches eine zwischen Lagerhülsen angeordnete Spannhülse aufweist, wobei die Lagerhülsen mit ihrer Lagerstirnseite jeweils an einem Axiallager gelagert sind. Zielführend ist vorgesehen, dass die Lagerhülse und die Spannhülse an ihren jeweils aneinander liegenden Stirnseiten einen jeweils korrespondierend ausgeführten sphärischen Bereich aufweisen, welche sphärischen Bereiche ineinander greifen.

In bevorzugter, nicht erfinderischer Ausgestaltung ist vorgesehen, dass die jeweilige Lagerhülse an der betreffenden Stirnseite eine sphärische, also kugelartig ausgeführte Oberfläche aufweist, wobei die Spannhülse dann die entsprechend ausgeführte, sphärische Vertiefung aufweist. Natürlich kann auch vorgesehen sein, die sphärische, also kugelartige Oberfläche jeweils an den Stirnseiten der jeweiligen Spannhülse anzuordnen, wobei die korrespondierende Vertiefung dann natürlich an der betreffenden Stirnseite der Lagerhülse angeordnet wäre.

In weiter bevorzugter, nicht erfinderischer Ausgestaltung weist die Lagerhülse an ihrer betreffenden Stirnseite den sphärisch ausgeführten Bereich auf, an dem Übergangsbereiche, also ein innerer Übergangsbereich und ein äußerer Übergangsbereich in Richtung zum Innen- bzw. Außenumfang der Lagerhülse angeordnet sind. Der Innenumfang der Lagerhülse ist in Richtung zur Welle orientiert, wobei der Außenumfang gegenüberliegend dazu angeordnet ist, bevorzugt in Richtung einer Lagerbuchse orientiert ist. Der innere Übergangsbereich ist leicht geneigt von der Innenumfangsoberfläche wegorientiert verlaufend ausgeführt, und schließt sich an den sphärischen Bereich an. Der äußere Übergangsbereich ist gegenläufig dazu von dem sphärischen Bereich an der Außenumfangsoberfläche mündend ausgeführt. Die kugelartige Oberfläche, also der sphärische Bereich ist mit seinem Zenit bezogen auf eine Mittelachse der Lagerhülse bevorzugt außermittig angeordnet bzw. nach außen versetzt. Bevorzugt ist weiter, wenn der innere Übergangsbereich einen größeren Erstreckungsbetrag aufweist als der äußere Übergangsbereich. Die betreffende Stirnseite der Lagerhülse weist so den sphärischen Bereich auf, welcher so quasi als kugelartiger Abschnitt ausgeführt ist, wobei die betreffende Stirnseite noch die quasi konusartig verlaufenden Übergangsbereiche aufweist. Natürlich kann der Zenit auch zentrisch, also deckungsgleich zur Mittelachse angeordnet sein, was natürlich eine entsprechend angepasste Ausgestaltung der Übergangsbereiche bedeutet.

Vorteilhaft wird aufgrund der sphärischen, nicht erfinderischen Ausgestaltung, bzw. aufgrund der quasi kugelabschnittsartigen Ausgestaltung der zur Vertiefung orientierten Oberfläche erreicht, dass bei mechanischer Vorspannung der keramisch-metallischen Verbindung und/oder bei thermischer Ausdehnung der metallischen Komponente z.B. eine Kantenbelastung vermieden wird. Stattdessen werden schädliche Spannungsübergänge und/oder Spannungsspitzen vermieden. Zudem wird auch bei thermischer Beanspruchung bzw. bei Druckbeanspruchung vorteilhaft erreicht, dass durch die kugelabschnittsartige Anlage in der korrespondierenden Vertiefung stets eine quasi zentrierte Montagelage sichergestellt ist. Insbesondere wird die artungleiche Verbindung der metallischen und keramischen Verbindungspartner einfacher herzustellen sein, da die sphärische Ausgestaltung gleichmäßige Spannungsübergänge ermöglicht, wobei stets eine punktartige oder linienartige Belastung vermieden ist, wobei stattdessen eine über die Kugeloberfläche erzeugte gleichmäßige Flächenbelastung erreicht wird.

Vorteilhaft ist auch, dass die Spannhülse mit der sphärischen, nicht erfinderischen Ausgestaltung an ihren Stirnseiten im Betriebszustand an der korrespondierenden sphärischen Ausgestaltung der jeweiligen Stirnseite der Lagerhülse abrollt, ohne diese radial oder axial zu belasten.

Möglich ist, dass die Lagerhülse aus einer gesinterten Keramik (z.B. gesintertes Siliziumkarbid; SSiC) gebildet ist. Die betreffende Stirnseite mit ihrer zielführenden Ausgestaltung kann bei der Herstellung der Lagerhülse gleichzeitig mit eingesintert werden, oder nachträglich hergestellt, bzw. angeformt werden. Die Spannhülse kann aus einem metallischen oder nicht-metallischen Werkstoff gebildet sein.

In weiter günstiger Ausführung kann vorgesehen sein, dass die Spannhülse an zumindest einer ihrer Längsseiten zumindest eine Eindrehung, bevorzugt eine äquatoriale Eindrehung aufweist.

Eindrehungen sind Materialausnehmungen, welche von einem Außenumfang in Richtung zu einem Innenumfang oder von einem Innenumfang in Richtung zu einem Außenumfang geführt sind, ohne durchgängig zu sein. Durch die Eindrehung erhält die Spannhülse eine gewisse Anpassbarkeit bzw. Flexibilität, wobei die Spannhülse bei der Montage unter Vorspannung verspannt wird, wobei unter thermischer Einwirkung bedingte Dehnungen von der Spannhülse kompensiert werden. Sind die Eindrehungen mit ihrer Mittelachse senkrecht zu einer ebenen Oberfläche angeordnet, stellt dies im Sinne der Erfindung eine äquatoriale Eindrehung dar. Natürlich können die Eindrehungen mit ihrer Mittelachse auch winklig zur ebenen Oberfläche vorgesehen sein.

Die Spannhülse weist also einen Innenumfang und einen dazu gegenüberliegenden Außenumfang auf. Mit dem Innenumfang ist die Spannhülse in Richtung zur Welle bzw. in Richtung zur Magnetkupplungspumpenwelle orientiert. Zielführend ist vorgesehen, dass die Spannhülse mehrere Eindrehungen hat. In bevorzugter Ausführung kann vorgesehen sein, jeweils eine Eindrehung jeweils in einem Stirnseitenbereich der Spannhülse einzubringen, welche schlitzartig ausgeführt sein können. Die beispielhaft schlitzartigen Eindrehungen können von dem Innenumfang in Richtung zum Außenumfang in die Spannhülse eingebracht sein.

In weiter bevorzugter, nicht erfinderischer Ausgestaltung kann vorgesehen sein, dass die Spannhülse eine Eindrehung aufweist, welche mittig in die Spannhülse eingebracht ist. Günstig ist, wenn diese mittige Eindrehung von dem Innenumfang in Richtung zum Außenumfang in die Spannhülse, also bevorzugt gleichorientiert wie die stirnseitigen Eindrehungen in die Spannhülse eingebracht ist. Beispielsweise können die stirnseitigen Eindrehungen schmaler sein als die mittig angeordnete Eindrehung.

In weiter günstiger, nicht erfinderischer Ausgestaltung kann vorgesehen sein zwischen den jeweils stirnseitigen Eindrehungen und der mittigen Eindrehung noch Zwischeneindrehungen vorzusehen, welche von dem Außenumfang in Richtung zum Innenumfang in die Spannhülse, also entgegengesetzt orientiert zu den stirnseitigen und der mittigen Eindrehung in die Spannhülse eingebracht sind.

Zweckmäßig ist, wenn die im Stirnseitenbereich angeordneten Eindrehungen beispielhaft schlitzartig mit einem bevorzugt verrundeten Schlitzgrund ausgeführt sind. Die mittige Eindrehung kann im Schnitt gesehen U-förmig mit einem Basissteg und zwei U-Schenkeln ausgeführt sein, wobei die U-Schenkel senkrecht zu der Basis angeordnet sein können. Bevorzugt kann vorgesehen sein, die Zwischeneindrehungen quasi U-förmig auszuführen, wobei sich die U-Schenkel voneinander wegorientiert in einem stumpfen Winkel zur Basis angeordnet sind, so dass eine sich von dem Basissteg in Richtung zum Außenumfang konusförmig erweiternde Materialausnehmung gebildet ist. Natürlich soll die beispielhaft genannte, geometrische Ausgestaltung der Eindrehungen und Materialausnehmungen nicht beschränkend wirken. Insbesondere ist die Abfolge und Anzahl der Eindrehungen lediglich beispielhaft.

Die vorteilhaft ausgeführte Spannhülse kann vorteilhaft thermische Dehnungen ausgleichen. Besonders zielführend ist, wenn die Spannhülse noch die zuvor beschriebene sphärische Ausgestaltung an ihren Stirnseiten aufweist. In besonders bevorzugter Ausgestaltung weist die Spannhülse an ihren Stirnseiten jeweils die zur sphärischen Oberfläche der zugeordneten Stirnseite der Lagerhülse korrespondierend ausgeführte sphärische Vertiefung auf.

In besonders bevorzugter Ausführung besteht die Spannhülse aus einem metallischen oder nicht-metallischen Werkstoff, insbesondere aus einem hochwarmfesten Edelstahl oder mit ähnlichen physikalischen Materialeigenschaften, wobei die Spannhülse auch aus einem Duplexstahl oder aus einem Federstahl gebildet sein kann.

Günstig ist auch, wenn das Axiallagerelement eine an die Lagerhülse angepasste Ausnehmung aufweist.

Zweckmäßig ist, wenn die Ausnehmung stufenartig, also quasi L-förmig mit einem Hochsteg und einem Längssteg ausgeführt ist. Der Hochsteg erstreckt sich von einem zur Welle orientierten Innenumfang in Richtung zum gegenüberliegenden Außenumfang. An dem Hochsteg schließt sich der Längssteg an, welcher sich in Richtung zu einer inneren Stirnseite der Lagerscheibe erstreckt.

Die Ausnehmung in der bevorzugten stufenartigen Ausgestaltung ist in ihrer Dimension, insbesondere in dem Erstreckungsbetrag des Hochstegs an eine radiale Ausgestaltung der Lagerhülse angepasst, so dass die Lagerhülse mit ihrer Lagerstirnseite an dem Hochsteg der Lagerscheibe, und mit ihrem entsprechenden Außenumfangsabschnitt an dem Längssteg anliegt. Die Lagerhülse ist mit ihrem entsprechenden Stirnseitenabschnitt also quasi in der Lagerscheibe aufgenommen.

Die Lagerhülse ist aus einem keramischen Werkstoff, beispielsweise aus einem gesinterten Siliziumkarbid (SSiC) gebildet. In bevorzugter Ausgestaltung ist die Lagerscheibe, also das Axiallagerelement aus einem dazu artgleichen Werkstoff, also beispielsweise auch aus einem gesinterten Siliziumkarbid gebildet. Dies ist vorteilhaft, da so beide Bauteile dieselben Eigenschaften, insbesondere bezügliche des thermischen Ausdehnungskoeffizienten haben. Die Lagerscheibe bildet das Axiallagerelement.

Um noch reibungserhöhende Maßnahmen treffen zu können, kann vorgesehen sein, das Axiallagerelement und/oder die Lagerhülse stirnseitig mit einer reibungserhöhenden Beschichtung zu versehen. Zweckmäßig ist dabei, wenn die Beschichtung der Lagerhülse an der Lagerstirnseite zur Lagerscheibe bzw. zum Axiallagerelement, oder an dem Hochsteg der Lagerscheibe bzw. des Axiallagerelementes vorgesehen ist, wobei die Beschichtung an den harten Keramikwerkstoff angepasst sein sollte. Günstig ist, hier eine Diamantbeschichtung vorzusehen. Möglich ist auch eine Beschichtung an der Lagerscheibe, also an dem Axiallagerelement, bzw. an dessen Kontaktbereich zu einem Lagerscheibenaufnahmeelement bzw. zu einer Axiallagerfassung. Obwohl das Lagerscheibenaufnahmeelement bzw. die Axiallagerfassung aus einem bezogen auf den keramischen Werkstoff weicheren Werkstoff gebildet sein kann, kann bevorzugt eine Diamantbeschichtung vorgesehen sein.

Mit der Erfindung wird so vorteilhaft auch eine Zentrierung in axialer und radialer Richtung durch die vorteilhaft ausgeführte keramische Lagerscheibe (Axiallagerelement) erreicht. Eine Zentrierung wird beispielsweise auch durch eine sphärische Ausgestaltung der Lagerhülse zusammen mit der sphärischen Ausführung der vorgespannten Spannhülse erreicht, welche noch die besonders quasi wellenförmige Ausgestaltung mit den beispielhaft genannten Eindrehungen haben kann. Die materialbedingte thermische Ausdehnungdifferenz zwischen den unterschiedlichen Werkstoffen (SSiC und Edelstahlwelle) gleicht die vorgespannte Spannhülse so aus. Die Spannhülse dient im kalten Zustand als Drehmoment begrenzendes Element und gleicht im Betriebszustand (warm) die Längenausdehnung der Welle über die Vorspannung aus.

Die Vorspannung der Spannhülse dient dabei dem Kraftschluss zwischen den rotierenden Teilen wie z.B. Laufrad, Lagerscheiben, Lagerhülsen, Welle, innerer Magnetrotor und der Spannhülse selbst. Die Vorspannung wird dabei bevorzugt so gewählt, dass der Kraftschluss für die Übertragung der Reibmomente auch unter thermischen Einfluss optimal aufrechterhalten bleibt. Die besondere, beispielhaft genannte, quasi wellenförmige Ausgestaltung der Spannhülse erzwingt unter Vorspannung im kalten Zustand eine (radiale) Deformierung der Spannhülse nach innen, wobei sich die Spannhülse auf der Welle abstützt und die radiale Führung der Gleitlagerung übernimmt. Unter thermischem Einfluss gleicht die vorgespannte Spannhülse dann die materialbedingten, thermischen Längenausdehnungsdifferenzen zwischen den unterschiedlichen Werkstoffen, also zwischen den SSiC-Komponenten und der Edelstahlwelle (SSiC-Edelstahl = ca: 1:4) axial und radial aus. So wird mit der Erfindung stets ein Kraftschluss auch unter unterschiedlichen thermischen Einfluss (unterschiedliche Temperaturen) gewährleistet. Wie bereits angeführt "rollt" die Spannhülse an den Lagerhülsen durch die korrespondierende sphärische Ausgestaltung der betreffenden Stirnseiten ab, ohne die Lagerhülse zu belasten. Unter thermischem Einfluss verändert sich der Wellendurchmesser und deren Länge, was soweit bekannt ist. Die radiale Zentrierung erfolgt dabei über die vorgespannte Spannhülse welche von der sich ausdehnenden Welle unter Beibehaltung der Vorspannung quasi aus einem taillierten Zustand in eine zylindrische Grundposition gedrückt wird. Dieses quasi erzwungene nach außen drücken der Spannhülse in die zylindrische Grundposition gleicht die Längenausdehnungsdifferenz der Welle zu den sich nicht oder nur gering ausdehnenden keramischen Lagerpartnern aus. Mit der Erfindung kann so vorteilhaft auf im Stand der Technik verwendete statische, elastische Weichteile wie z.B. Dichtungsmaterial zum axialen Dehnungsausgleich verzichtet werden, wobei jederzeit ein Rundlauf, also die Zentrierung unter gleichzeitiger Aufrechterhaltung der Vorspannung trotz unterschiedlicher Werkstoffe in Temperaturbereichen von beispielsweise -60°C bis +450°C gewährleistet ist. Die Erfindung ist besonders vorteilhaft zur Lagerung der Welle von Magnetkupplungspumpen einsetzbar.

Weitere vorteilhafte Ausgestaltungen der Erfindung sind in den Unteransprüchen und der folgenden Figurenbeschreibung offenbart. Es zeigen
Fig.1 eine Magnetkupplungspumpe in einer Schnittdarstellung,
Fig.2 ein hydrodynamisches Gleitlager der Magnetkupplungspumpe aus Figur 1 in einer Vergrößerung,
Fig.3 einen Ausschnitt des Gleitlagers aus Figur 2 mit einer vormontierten Spannhülse,
Fig.4 einen Ausschnitt des Gleitlagers aus Figur 2 mit einer vorgespannten Spannhülse,
Fig. 5 einen Ausschnitt des Gleitlagers aus Figur 2 unter thermischem Einfluss,
Fig. 6 einen Ausschnitt des Gleitlagers aus Figur 2 zur Ausgestaltung der Lagerscheibe, und
Fig.7 eine Vergrößerte Einzelheit aus Figur 2 zur Darstellung eines doppelten Pressverbundes.

In den unterschiedlichen Figuren sind gleiche Teile stets mit denselben Bezugszeichen versehen, weswegen diese in der Regel auch nur einmal beschrieben werden.

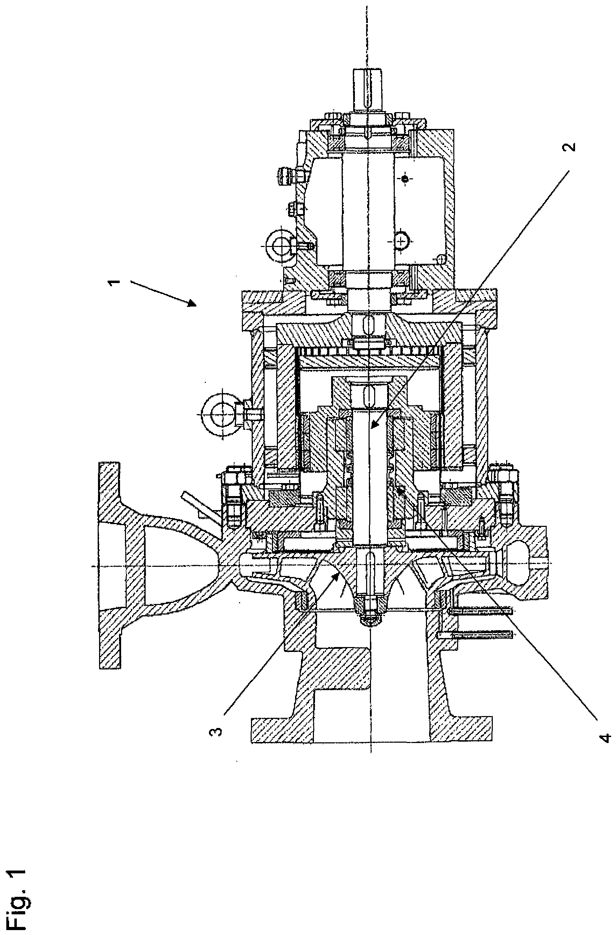

Figur 1 zeigt eine Magnetkupplungspumpe 1 mit einer Pumpenwelle 2, z.B. als Edelstahlwelle 2, welche ein Laufrad 3 trägt, und welche in einem hydrodynamischen Gleitlager 4 gelagert ist, wobei das hydrodynamische Gleitlager 4 von Fördermedium, aber auch mit einem anderen, produktverträglichen Fluid extern geschmiert werden kann. Die Magnetkupplungspumpe 1 ist an sich bekannt, weswegen diese nicht näher beschrieben ist.

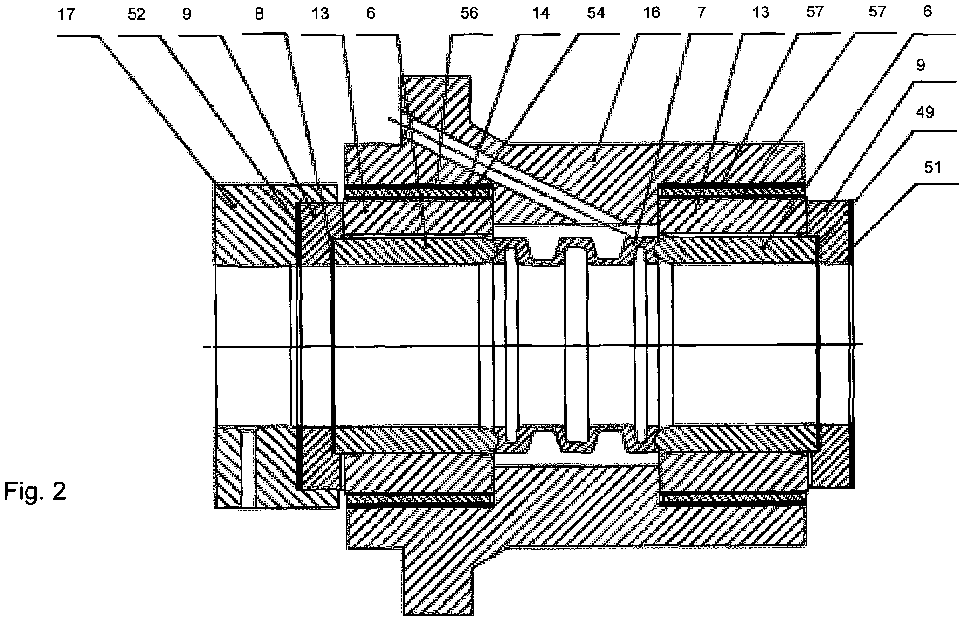

Die Erfindung zielt auf die vorteilhafte Ausgestaltung des Gleitlagers 4 der Welle 2 bzw, der Pumpenwelle 2, insbesondere der Magnetkupplungspumpe 1, wobei das hydrodynamische Gleitlager 4 eine zwischen Lagerhülsen 6 angeordnete Spannhülse 7 aufweist, wobei die Lagerhülsen 7 mit ihrer jeweiligen Lagerstirnseite 8 jeweils an einem Axiallagerelement 9 gelagert sind (Figur 2). Das Axiallagerelement 9 wir im Folgenden auch als Lagerscheibe 9 bezeichnet, wobei das hydrodynamische Gleitlager 4 im Folgenden lediglich als Gleitlager 4 bezeichnet wird.

Wie z.B. in Figur 2 erkennbar ist die Spannhülse 7 zwischen zwei Lagerhülsen 6 angeordnet. Die jeweiligen Stirnseite 11 der Lagerhülse 6 ist in Kontakt mit den zugeordneten Stirnseiten 12 der Spannhülse 7. Gegenüberliegend zur spannhülsenseitigen Stirnseite 11 ist die Lagerhülse 6 mit ihrer Lagerstirnseite 8 in der Lagerscheibe 9 gelagert.

Das Gleitlager 4 weist noch Lagerbuchsen 13, Spannringe 14 sowie ein Lagergehäuse 16 auf. Die Lagerscheibe 9 ist in einer Axiallagerfassung 17, welche auch als Lagerscheibenaufnahmeelement 17 bezeichnet werden kann, gehalten.

Die Lagerhülse 6 weist an ihrer spannhülsenseitigen Stirnseite 11 eine sphärische Ausgestaltung auf, welche mit einer korrespondierenden sphärischen Ausgestaltung der betreffenden Stirnseite 12 der Spannhülse 7 zusammenwirkt.

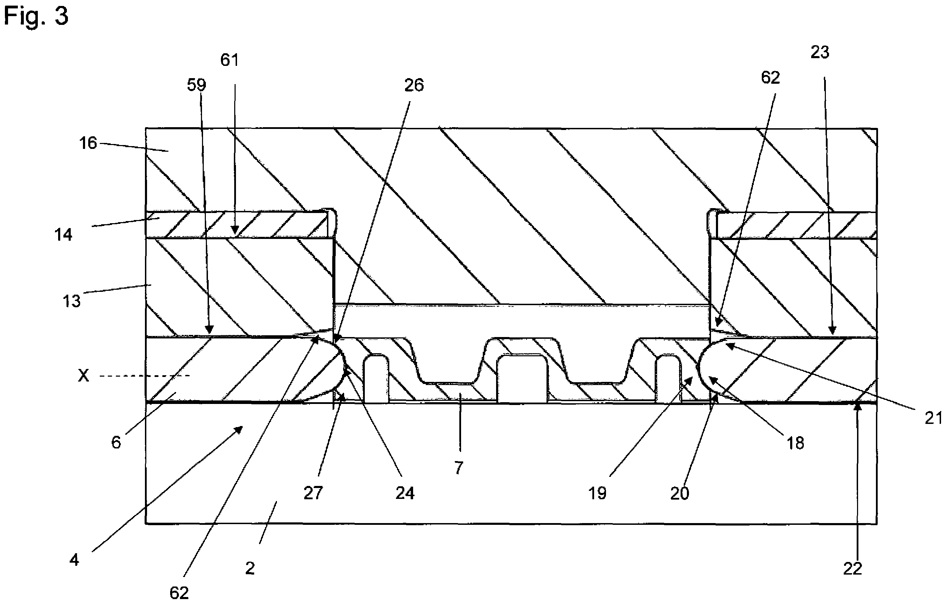

In bevorzugter Ausgestaltung weist die spannhülsenseitige Stirnseite 11 der Lagerhülse 6 einen sphärisch ausgeführten Bereich 18, bevorzugt eine kugelabschnittsartige Oberfläche 18 auf, welche in eine korrespondierend ausgeführte, sphärische Vertiefung 19 der Spannhülse 7 eingreift, wie z.B. in Figur 3 erkennbar ist.

In weiter bevorzugter Ausgestaltung weist die Lagerhülse 6 wie in den Figuren 3 bis 5 erkennbar an ihrer spannhülsenseitigen Stirnseite 11 den sphärisch ausgeführten Bereich 18 auf, an dem Übergangsbereiche 20, 21, also ein innerer Übergangsbereich 20 und ein äußerer Übergangsbereich 21 in Richtung zum Innen- bzw. Außenumfang 22 ,23 der Lagerhülse 6 angeordnet sind. Der Innenumfang 22 der Lagerhülse 6 ist in Richtung zur Welle 2 orientiert, wobei der Außenumfang 23 gegenüberliegend dazu angeordnet ist, bevorzugt in Richtung zu der Lagerbuchse 13 orientiert ist. Der innere Übergangsbereich 20 ist leicht geneigt von der Innenumfangsoberfläche 22 wegorientiert, in der Zeichnungsebene nach oben verlaufend ausgeführt, und schließt sich an den sphärischen Bereich 18 an. Der äußere Übergangsbereich 21 ist gegenläufig dazu von dem sphärischen Bereich 18 an der Außenumfangsoberfläche 23 mündend ausgeführt, erstreckt sich in der Zeichnungsebene wie dargestellt also auch nach oben. Bevorzugt ist weiter, wenn der innere Übergangsbereich 20 einen größeren Erstreckungsbetrag aufweist als der äußere Übergangsbereich 21. Die kugelartige Oberfläche 18, also der sphärische Bereich 18 ist mit seinem Zenit 24 demnach bezogen auf eine Mittelachse X der Lagerhülse 6 außermittig angeordnet, bzw. in der Zeichnungsebene nach oben, also nach außen versetzt.

Die lagerhülsenseitige Stirnseite 12 der Spannhülse 7 ist korrespondierend dazu ausgeführt, wobei benachbart zur Vertiefung 19 stirnseitige Reststege 26,27 angeordnet sind. Der in der Zeichnungsebene dargestellte obere Reststeg 26 weist eine geringere Erstreckung auf als der in der Zeichnungsebene dargestellte untere Reststeg 27, so dass deren Ausführung an die Ausgestaltung der Übergangsbereiche 20 und 21 angepasst ist. Die Vertiefung 19 ist also auch außermittig angeordnet.

Durch die sphärische Ausgestaltung der ineinander greifenden Stirnseiten "rollt" die Spannhülse 7 an den Lagerhülsen 6 ab, ohne die Lagerhülse 6 zu belasten.

Die Spannhülse 7 weist in bevorzugter Ausgestaltung zumindest eine Eindrehung 28, 29, und/oder 31, besonders bevorzugt zwei stirnseitige Eindrehungen 28, eine mittige Eindrehung 29 und zwei Zwischeneindrehungen 31 auf.

Die Eindrehungen 28 bis 31 sind bevorzugt als äquatoriale Eindrehungen 28 bis 31 ausgeführt, und könne auch als Materialausnehmungen 28 bis 31 bezeichnet werden. Durch die Materialausnehmungen 28 bis 31 ist die Spannhülse 7 quasi wellenförmig ausgeführt.

Die stirnseitige Eindrehungen 28 sind in einem Stirnseitenbereich 32 der Spannhülse 7 von deren Innenumfang 33 aus in Richtung zu deren Außenumfang 34 in die Spannhülse 7 eingebracht. Die stirnseitigen Eindrehungen 28 sind schlitzartig ausgeführt, und können einen verrundeten Grund 36 aufweisen, wobei z.B. in den Figuren 3 bis 5 eine ebene Ausgestaltung des Grundes 36 erkennbar ist.

Die mittigen Eindrehungen 29 sind zwischen den stirnseitigen Eindrehungen 28 angeordnet, und im dargestellten Ausführungsbeispiel breiter als die stirnseitigen Eindrehungen 28. Die mittigen Eindrehungen 29 sind quasi U-förmig ausgeführt, wobei U-Schenkel 37 geneigt zur Basis 38 oder senkrecht dazu angeordnet sein können. Die mittigen Eindrehungen 29 sind von dem Innenumfang 33 aus in Richtung zu dem Außenumfang 34 in die Spannhülse 7 eingebracht. Die stirnseitigen Eindrehungen 28 sind also gleichorientiert wie die mittigen Eindrehungen 29.

Die Zwischeneindrehungen 31 sind zwischen den mittigen Eindrehungen 29 und den stirnseitigen Eindrehungen 29 angeordnet, aber von dem Außenumfang 34 der Spannhülse 7 in Richtung zu deren Innenumfang 33 eingebracht.

Wie erkennbar kann vorgesehen sein, die Zwischeneindrehungen 31 quasi U-förmig auszuführen wobei deren U-Schenkel 39 voneinander wegorientiert in einem stumpfen Winkel zur Basis 41 angeordnet sind, so dass eine sich von der Basis 41 in Richtung zum Außenumfang 34 konusförmig erweiternde Materialausnehmung gebildet ist.

Natürlich soll die beispielhaft genannte, geometrische Ausgestaltung der Eindrehungen 28 bis 31 bzw. Materialausnehmungen 28 bis 31 nicht beschränkend wirken. Insbesondere ist die Abfolge und Anzahl der Eindrehungen 28 bis 31 lediglich beispielhaft.

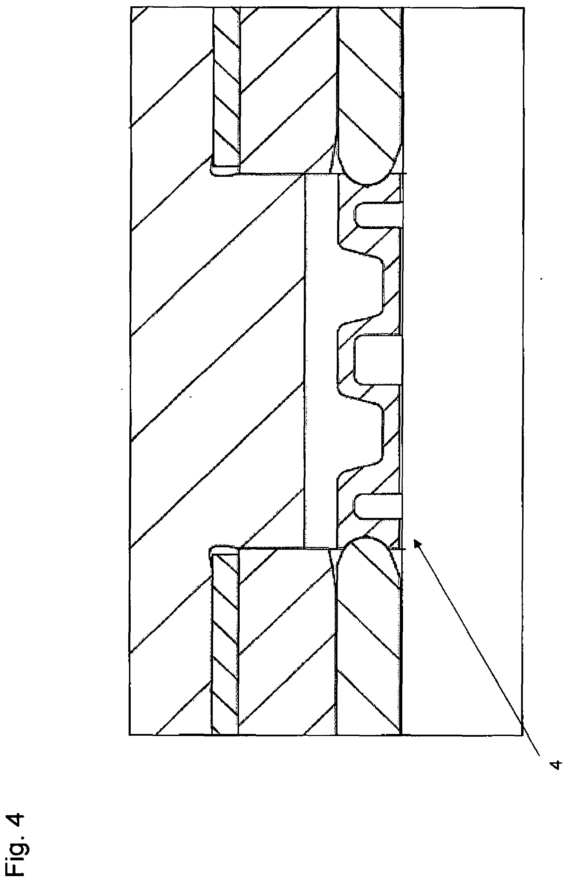

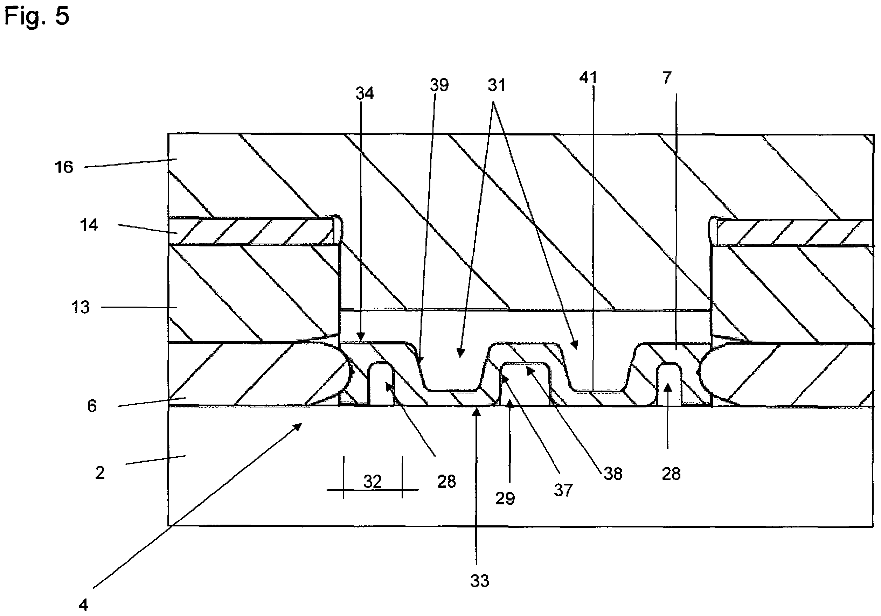

Die Bezugszeichen zur Beschreibung der sphärischen Ausgestaltung der Spannhülse 7 und Lagerhülse 6 sind in Figur 3 eingezeichnet, wobei die Bezugszeichen betreffend die Spannhülse 7 mit ihren Eindrehungen 28 bis 31 in Figur 5 eingezeichnet sind, wobei Figur 4 frei von Bezugszeichen gehalten ist, was der Übersicht dienen soll.

Bei dem in Figur 3 dargestellten Ausführungsbeispiel ist das Gleitlager 4 vormontiert, wobei die Spannhülse 7 mit Ihrem Innenumfang 33 vollständig zur Wellenoberfläche beabstandet ist.

In Figur 4 ist ein vorgespannter Zustand dargestellt, wobei der Innenumfang 33 der Spannhülse 7 im Bereich der Zwischeneindrehungen 31 Kontakt zur Wellenoberfläche hat. Die Stirnseitenbereiche 32 des Innenumfangs 33 sind zur Wellenoberfläche beabstandet.

In Figur 5 ist ein Betriebszustand dargestellt, wobei ein Temperaturbetrag von beispielsweise 320°C vorliegt. Mittels der vorteilhaft ausgeführten Spannhülse 7 wird vorteilhaft ein Ausdehnungsausgleich der Welle 2 sowohl in axialer als auch in radialer Richtung erreicht, wie in Figur 5 dargestellt. Auch die Stirnseitenbereiche 32 des Innenumfangs sind in Kontakt mit der Wellenoberfläche.

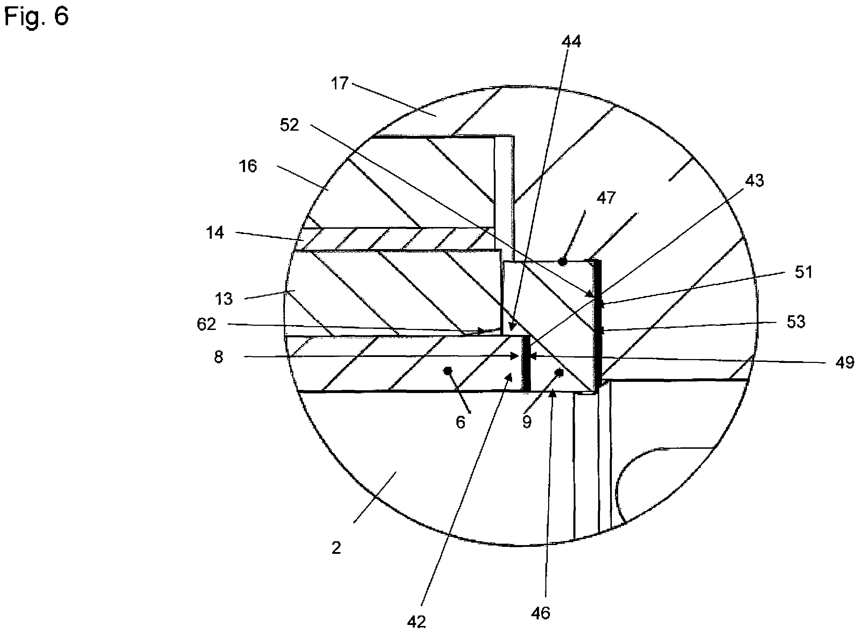

In Figur 6 ist die besondere Lagerung der Lagerhülse 6 in der Lagerscheibe 9 dargestellt.

Die Lagerscheibe 9 weist eine Ausnehmung 42 auf welche bevorzugt stufenartig ausgeführt ist. Die Ausnehmung 42 weist einen Hochsteg 43 und einen sich daran anschließenden Längssteg 44 auf. Der Hochsteg 43 ist in der Zeichnungsebene von einem Innenumfang 46 der Lagerscheibe 9 in Richtung zu einem Außenumfang 47 orientiert, und geht in den Längssteg 44 über, welcher zu einer inneren Stirnseite 48 der Lagerscheibe 9 orientiert ist. Die Innere Stirnseite 48 der Lagerscheibe 9 kann in Kontakt mit der Lagerbuchse 13 sein, wie in Figur 6 erkennbar ist. Der Hochsteg 43 kann auch als Radialsteg bezeichnet werden. Die stufenartige Ausnehmung 42 ist so innen liegend angeordnet.

In ihrer Dimension ist die Ausnehmung 42 an die Ausgestaltung der Lagerhülse 6 in radialer Richtung aber auch in axialer Richtung angepasst, so dass die jeweilige Lagerstirnseite 8 und ein sich daran anschließender Lagerstirnseitenbereich der jeweiligen Lagerhülse 6 quasi in der Lagerscheibe 9 aufgenommen ist.

Die Lagerhülse 6 besteht beispielsweise aus einem keramischen Werkstoff, z.B. aus einem gesinterten Siliziumkarbid (SSiC). Vorteilhaft kann die Lagerscheibe aus einem keramischen Werkstoff, z.B aus dem zum Werkstoff der Lagerhülse 6 identischen Werkstoff, also z.B. aus einem gesinterten Siliziumkarbid (SSiC) bestehen. So sind thermisch bedingte Ausdehnungsunterschiede der Lagerhülse 6 zur Lagerscheibe 9 ausgeschlossen.

Möglich ist noch, reibungserhöhende Beschichtungen 49, 51 vorzusehen, wie beispielhaft in Figur 6 dargestellt.

Die reibungserhöhende Beschichtung 49 kann zwischen der lagerseitigen Stirnseite 8 der Lagerhülse 6 und dem Hochsteg 43 wirken. Die reibungserhöhende Beschichtung 49 kann entweder an der Lagerstirnseite 8 oder an dem Hochsteg 43 angeordnet sein, und bevorzugt als Diamantbeschichtung ausgeführt sein. Die reibungserhöhende Beschichtung 49, 51 kann z.B. in Form einer diamantbeschichteten Folie aufgeklebt oder als Diamantbeschichtung aufgespritzt werden, wobei die beispielhaft genannten Auftragverfahren natürlich nicht beschränkend sein sollen. Die reibungserhöhende Beschichtung 51 kann entweder an der Außenstirnseite 52 der Lagerscheibe 9 oder an der korrespondierenden Anlagefläche 53 der Axiallagerfassung 17 angeordnet sein, und ebenfalls als Diamantbeschichtung (z.B. diamantbeschichtete Folie) ausgeführt sein. Obwohl Figur 6 lediglich eine Seite darstellt gilt das Gesagte auch für die nicht dargestellte Seite des Gleitlagers 4.

Die Spannhülse 7 kann aus einem Edelstahl beispielsweise aus einem hochwarmfesten Edelstahl oder mit ähnlichen physikalischen Eigenschaften gebildet sein. Der Spannring 14 kann aus einem metallischen oder nichtmetallischen Werkstoff, bevorzugt aus einem metallischen Sonderwerkstoff wie z.B. aus einem Duplexstahl oder mit ähnlichen physikalischen Eigenschaften gebildet sein. Mögliche Materialien für den Spannring 14 können noch hochwarmfeste Edelstähle oder Federstähle sein, wobei die Spannhülse 7 noch aus Duplexstählen oder aus einem Federstahl gebildet sein kann.

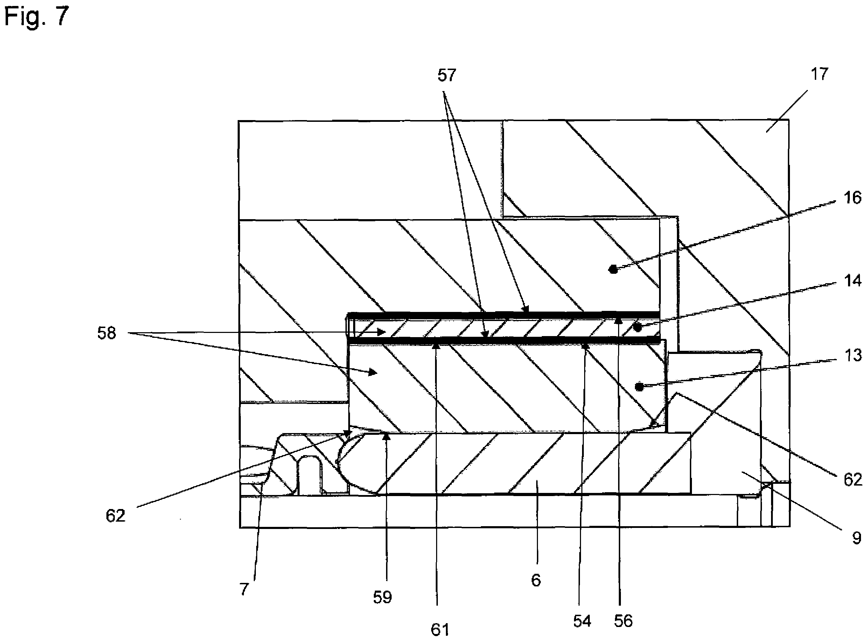

Die Spannringe 14 sind zwischen den Lagerbuchsen 13 und dem Lagergehäuse 16 angeordnet. In bevorzugter Ausgestaltung weist der Spannring 14 sowohl an seinem Innenumfang 54 als auch an seinem Außenumfang 56 jeweils eine reibungserhöhende Beschichtung 57 auf, wie Figur 7 zeigt.

Bei der Montage wird bevorzugt so vorgegangen, dass zunächst der Spannring 14 mit der reibungserhöhenden Beschichtung 57 versehen wird. Diese kann bzw. können wie die reibungserhöhenden Beschichtungen 49 bzw. 51 aufgebracht werden. Sodann, oder gleichzeitig zum Beschichtungsvorgang wird der Spannring 14 erwärmt, so dass dieser sich weitet. Der so geweitete Spannring 14 nimmt die Lagerbuchse 13 auf, so dass eine Vormontageeinheit 58 gebildet ist. Wird der Spannring 14 abgekühlt, zieht dieser sich seinen Materialeigenschaften folgend zusammen, so dass zwischen den aneinander liegenden Oberflächen ein erster Pressverbund gebildet ist, wobei die reibungserhöhende Beschichtung 57 zwischengeschaltet ist. Anschließend wird das Lagergehäuse 16 erwärmt, so dass dieses sich weitet. Die Vormontageeinheit 58 ist so in das Lagergehäuse 16 einsetzbar, wobei das Lagergehäuse 16 anschließend abkühlt, sich also wieder zusammenzieht.

Das Abkühlen der Vormontageeinheit 58, bzw. dessen Spannring kann ohne Einsatz entsprechender Kühlvorrichtungen oder mittels solcher erfolgen was natürlich auch für das Lagergehäuse 16 gilt.

Auf die Montage der weiteren Komponenten des Gleitlagers 4 wird nicht näher eingegangen.

Zielführend ist, dass quasi ein doppelter Pressverbund zum einem zwischen dem Spannring 14 und der Lagerbuchse 13 und zum anderen zwischen dem Spannring 14 und dem Lagergehäuse 16 bereitgestellt wird.

So kann unter anderem eine axiale Verschiebesicherung und eine radiale Verdrehsicherung erreicht werden. Die jeweils vorgesehene reibungserhöhende Beschichtung 57 unterstützt dies.

Des Weiteren ist z.B. in Figuren 3 und 6 noch erkennbar, dass die Lagerbuchse 13 an ihrem Innenumfang 59 angefaste Kanten (Kantenfasen 62) aufweist. Die Kantenfasen 62 können beidseitig, also in der Zeichnungsebene an der rechten und/oder linken Stirnseite vorgesehen sein. Diese Maßnahme ist insbesondere zielführend bei dem An-. bzw. Abfahren der beispielhaften Magnetkupplungspumpe 1, da so der Kantendruck, welcher durch Taumelbewegungen der rotierenden Einheit und Einwirkungen von Radialkräften von einem Druckstutzen auf das Laufrad entstehen könnte, kompensiert werden kann. Insofern sind Kantenfasen 62 vorteilhaft um Kantenbelastungen z.B. beim An- und Abfahren der Magnetkupplungspumpe 1 z.B. durch radiale hydraulische Belastung zu vermeiden. Eine partielle bzw. punktuelle Lagerbelastung wird somit quasi ausgeschlossen.

Auch in Figur 7 ist noch erkennbar, dass die Lagerbuchse 13 bevorzugt an ihrem Innenumfang 59 die Kantenfase 62 aufweist. Auch am Außenumfang 61 können Kantenfasen angeordnet sein. Ebenso kann auch der Spannring 14 und auch das Lagergehäuse 16 Kantenfasen aufweisen.

Das Lagergehäuse 16 und die Welle 2 bestehen aus einem Edelstahl. Die Lagerbuchse 13, die Lagerhülse 6 und die Lagerscheibe 9 sind aus einem keramischen Werkstoff, z.B. aus einem gesinterten Siliziumoxid (SSiC) gebildet, wobei die Spanhülse 7 z.B. aus einem hochwarmfesten Edelstahl und der Spannring 14 z.B. aus einem Duplexstahl bestehen können. Die reibungserhöhenden Beschichtungen 49,51 und 57 können als Diamantbeschichtung ausgeführt sein.

Die beispielhaft genannten Werkstoffpaarungen der Lagerhülse 6, der Lagerscheiben 9 sowie der Lagerbuchse 13 und der Spannhülse 7 aber auch des Spannrings 14 sollen natürlich nicht beschränkend sein. Denkbar ist auch die jeweiligen Komponenten grundsätzlich aus allen geeigneten Keramiken zu bilden. Auch Wolframkarbid, Kohle, Teflon (PTFE), glasfaserverstärkte Materialien, kohlefaserverstärkte Materialien oder metallische Materialien sind als Werkstoff bzw. als Werkstoffkombinationen möglich.

### Bezugszeichenliste:

- 1: Magnetkupplungspumpe
- 2: Pumpenwelle
- 3: Laufrad
- 4: Hydrodynamisches Gleitlager
- 5 6: Lagerhülse
- 7: Spannhülse
- 8: Lagerstirnseite
- 9: Axiallagerelement
- 10 11: Stirnseite von 6
- 12: Stirnseite von 7
- 13: Lagerbuchsen
- 14: Spannringe
- 15 16: Lagergehäuse
- 17: Axiallagerfassung
- 18: Sphärische Oberfläche von 11
- 19: Sphärische Vertiefung in 12
- 20: Übergangsbereich
- 21: Übergangsbereich
- 22: Innenumfang von 6
- 23: Außenumfang von 6
- 24: Zenit von 18
- 25 26: Oberer Reststeg an 12
- 27: Unterer Reststeg an 12
- 28: Stirnseitige Eindrehung
- 29: Mittige Eindrehung
- 30 31: Zwischeneindrehung
- 32: Stirnseitenbereich von 7
- 33: Innenumfang von 7
- 34: Außenumfang von 7
- 35 36: Grund von 28
- 37: U-Schenkel von 29
- 38: Basis von 29
- 39: U-Schenkel von 31
- 40 41: Basis von 31
- 42: Ausnehmung in 9
- 43: Hochsteg/Radialsteg
- 44: Längssteg
- 45 46: Innenumfang von 9
- 47: Außenumfang von 9
- 48: Innere Stirnseite von 9
- 49: Reibungserhöhende Beschichtung
- 50 51: Reibungserhöhende Beschichtung
- 52: Außenstirnseite von 9
- 53: Anlagefläche
- 54: Innenumfang von 14
- 55 56: Außenumfang von 14
- 57: Reibungserhöhende Beschichtung an 14
- 58: Vormontageeinheit
- 59: Innenumfang von 13
- 60 61: Außenumfang von 13
- 62: Kantenfasen

## Patentansprüche

1. Verfahren zur Montage eines hydrodynamischen Gleitlagers (4) einer Welle (2) einer Magnetkupplungspumpe (1), wobei das hydrodynamische Gleitlager (4) eine zwischen Lagerhülsen (6) angeordnete Spannhülse (7) und eine zwischen der Lagerhülse (6) und einem Lagergehäuse (16) angeordnete Lagerbuchse (13) keramischen Werkstoffs aufweist, **gekennzeichnet zumindest durch die Schritte**
A Beschichten eines Spannrings (14) zumindest an seinem zur Lagerbuchse (6) orientierten Innenumfang (54) mit einer reibungserhöhenden Beschichtung (57),
B Erwärmen des Spannrings (14) und Aufbringen auf die Lagerbuchse (13) so dass eine Vormontageeinheit (58) gebildet ist, und
C Erwärmen des Lagergehäuses (16), wobei die Vormontageeinheit (58) in das Lagergehäuse (16) eingesetzt wird.

2. Verfahren nach Anspruch 1, **dadurch gekennzeichnet, dass** die Vormontageeinheit (58) abgekühlt wird, bevor diese in das Lagergehäuse (16) eingesetzt wird.

3. Verfahren nach Anspruch 1 oder 2, **dadurch gekennzeichnet, dass** das Lagergehäuse (16) abgekühlt wird, nachdem die Vormontageeinheit (58) in das Lagergehäuse (16) eingesetzt ist.

4. Verfahren nach einem der vorhergehenden Ansprüche, **dadurch gekennzeichnet, dass** sowohl an seinem Innenumfang (54) als auch an einem Außenumfang (56) des Spannrings (14) eine reibungserhöhende Beschichtung (57) aufgebracht ist.

5. Verfahren nach einem der vorhergehenden Ansprüche, **dadurch gekennzeichnet, dass** an der Lagerbuchse (13) Kantenfasen (62) angebracht werden.

6. Hydrodynamisches Gleitlager einer Welle (2), insbesondere einer Magnetkupplungspumpe (1), wobei das hydrodynamische Gleitlager (4) eine zwischen Lagerhülsen (6) angeordnete Spannhülse (7) und eine zwischen der Lagerhülse (6) und einem Lagergehäuse (16) angeordnete Lagerbuchse (13) keramischen Werkstoffs aufweist montiert nach einem der vorhergehenden Ansprüche, **dadurch gekennzeichnet, dass** zwischen dem Lagergehäuse (16) und der Lagerbuchse (13) ein Spannring (14) angeordnet ist, welcher Spannring (14) an zumindest seinem zur Lagerbuchse (6) orientierten Innenumfang (54) eine reibungserhöhende Beschichtung (57) aufweist.

7. Hydrodynamisches Gleitlager nach Anspruch 6, **dadurch gekennzeichnet, dass** der Spannring (14) sowohl an seinem Innenumfang (54) als auch an seinem Außenumfang (56) eine reibungserhöhende Beschichtung (57) aufweist.

8. Hydrodynamisches Gleitlager Anspruch 6 oder 7, **dadurch gekennzeichnet, dass** der Spannring (14) einen Pressverbund zum einen zur Lagerbuchse (13) und zum anderen zum Lagergehäuse (16) aufweist.

9. Hydrodynamisches Gleitlager nach einem der Ansprüche 6 bis 8, **dadurch gekennzeichnet, dass** die Lagerbuchse (13) Kantenfasen (62) zumindest an ihrem Innenumfang (59) aufweist.

10. Hydrodynamisches Gleitlager nach einem der Ansprüche 6 bis 9, **dadurch gekennzeichnet, dass** die Lagerbuchse (13) aus einem keramischen Werkstoff, also aus einem gesinterten Siliziumkarbid und der Spannring (14) aus einem metallischen Werkstoff, also aus einem Duplexstahl gebildet ist, wobei die reibungserhöhende Beschichtung (57) als Diamantbeschichtung ausgeführt ist.

## Claims

1. Method for assembling a hydrodynamic plain bearing (4) of a shaft (2) of a magnetically coupled pump (1), the hydrodynamic plain bearing (4) having a clamping sleeve (7) which is arranged between bearing sleeves (6), and a bearing bush (13) made from ceramic material which is arranged between the bearing sleeve (6) and a bearing housing (16), characterized at least by the steps:
A coating of a clamping ring (14) with a friction-increasing coating (57) at least on its inner circumference (54) which is oriented towards the bearing bush (6),
B heating of the clamping ring (14) and attaching thereof to the bearing bush (13), with the result that a preassembly unit (58) is formed, and
C heating of the bearing housing (16), the preassembly unit (58) being inserted into the bearing housing (16).

2. Method according to Claim 1, **characterized in that** the preassembly unit (58) is cooled before it is inserted into the bearing housing (16).

3. Method according to Claim 1 or 2, **characterized in that** the bearing housing (16) is cooled after the preassembly unit (58) is inserted into the bearing housing (16).

4. Method according to one of the preceding claims, **characterized in that** a friction-increasing coating (57) is applied both on its inner circumference (54) and on an outer circumference (56) of the clamping ring (14).

5. Method according to one of the preceding claims, **characterized in that** bevelled edges (62) are added to the bearing bush (13).

6. Hydrodynamic plain bearing of a shaft (2), in particular of a magnetically coupled pump (1), the hydrodynamic plain bearing (4) having a clamping sleeve (7) which is arranged between bearing sleeves (6), and a bearing bush (13) made from ceramic material which is arranged between the bearing sleeve (6) and a bearing housing (16), assembled according to one of the preceding claims, **characterized in that** a clamping ring (14) is arranged between the bearing housing (16) and the bearing bush (13), which clamping ring (14) has a friction-increasing coating (57) on at least its inner circumference (54) which is oriented towards the bearing bush (6).

7. Hydrodynamic plain bearing according to Claim 6, **characterized in that** the clamping ring (14) has a friction-increasing coating (57) both on its inner circumference (54) and on its outer circumference (56).

8. Hydrodynamic plain bearing according to Claim 6 or 7, **characterized in that** the clamping ring (14) has a press fit firstly with respect to the bearing bush (13) and secondly with respect to the bearing housing (16).

9. Hydrodynamic plain bearing according to one of Claims 6 to 8, **characterized in that** the bearing bush (13) has bevelled edges (62) at least on its inner circumference (59).

10. Hydrodynamic plain bearing according to one of Claims 6 to 9, **characterized in that** the bearing bush (13) is formed from a ceramic material, that is to say from a sintered silicon carbide, and the clamping ring (14) is configured from a metallic material, that is to say from a duplex steel, the friction-increasing coating (57) being configured as a diamond coating.

## Revendications

1. Procédé de montage d'un palier hydrodynamique coulissant (4) d'un arbre (2) d'une pompe (1) à accouplement magnétique, le palier hydrodynamique coulissant (4) présentant une douille de serrage (7) disposée entre des douilles de palier (6) et une douille de palier (13) en matériau céramique disposée entre la douille de palier (6) et un boîtier de palier (16),
caractérisé au moins par les étapes qui consistent à :
A revêtir au moins la périphérie intérieure (54), orientée vers la douille de palier (6), d'une bague de serrage (14) par un revêtement (57) augmentant le frottement,
B chauffer la bague de serrage (14) et l' appliquer sur la douille de palier (13) de manière à former une unité pré-montée (58) et
C chauffer le boîtier de palier (16), l'unité pré-montée (58) étant insérée dans le boîtier de palier (16).

2. Procédé selon la revendication 1, **caractérisé en ce que** l'unité pré-montée (58) est refroidie avant d'être insérée dans le boîtier de palier (16).

3. Procédé selon la revendication 1 ou 2, **caractérisé en ce que** le boîtier de palier (16) est refroidi après que l'unité pré-montée (58) a été insérée dans le boîtier de palier (16).

4. Procédé selon l'une des revendications précédentes, **caractérisé en ce qu'**un revêtement (57) augmentant le frottement est appliqué tant sur la périphérie intérieure (54) que sur une périphérie extérieure (56) de la bague de serrage (14).

5. Procédé selon l'une des revendications précédentes, **caractérisé en ce que** des chanfreins d'arête (62) sont ménagés sur la douille de palier (13).

6. Palier hydrodynamique coulissant d'un arbre (2), notamment d'une pompe (1) à accouplement magnétique, le palier hydrodynamique coulissant (4) présentant une douille de serrage (7) disposée entre des douilles de palier (6) et une douille de palier (13) en matériau céramique disposée entre la douille de palier (6) et un boîtier de palier (16), monté selon l'une des revendications précédentes,
**caractérisé en ce qu'**une bague de serrage (14) est disposée entre le boîtier de palier (16) et la douille de palier (13), laquelle bague de serrage (14) présente un revêtement (57) augmentant le frottement au moins sur sa surface intérieure (54) orientée vers la douille de palier (6).

7. Palier hydrodynamique coulissant selon la revendication 6, **caractérisé en ce que** la bague de serrage (14) présente un revêtement (57) augmentant le frottement tant sur sa périphérie intérieure (54) que sur sa périphérie extérieure (56).

8. Palier hydrodynamique coulissant selon la revendication 6 ou 7, **caractérisé en ce que** la bague de serrage (14) présente une liaison comprimée d'une part avec la douille de palier (13) et d'autre part avec le boîtier de palier (16).

9. Palier hydrodynamique coulissant selon l'une des revendications 6 à 8, **caractérisé en ce que** la douille de palier (13) présente des chanfreins d'arête (62) au moins sur sa périphérie intérieure (59).

10. Palier hydrodynamique coulissant selon l'une des revendications 6 à 9, **caractérisé en ce que** la douille de palier (13) est formée d'un matériau céramique, à savoir un carbone de silicium fritté, et la bague de serrage (14) d'un matériau métallique, à savoir un acier duplex, le revêtement (57) augmentant le frottement étant réalisé sous la forme d'un revêtement diamanté.
